# EUROPÄISCHE PATENTSCHRIFT

(11) **EP 2 116 833 B1**
(45) Veröffentlichungstag und Bekanntmachung des Hinweises auf die Patenterteilung: **31.05.2017**
(21) Anmeldenummer: 09157574.6
(22) Anmeldetag: 08.04.2009
(51) Int. Cl.: G01L 5/16, G01L 1/16, G01M 17/02

(54) **Kraftmessdose**
Load cell
Cellule de mesure de force

(30) Priorität: 05.05.2008 CH 6982008
(43) Veröffentlichungstag der Anmeldung: 11.11.2009
(73) Patentinhaber: Kistler Holding AG, 8408 Winterthur (CH)
(72) Erfinder: Ammann, Martin, 8552, Felben-Wellhausen (CH); Furter, Frank, 8408, Winterthur (CH)

(56) Entgegenhaltungen:
- EP-A- 0 459 069
- EP-A- 0 594 534
- US-A- 3 582 691
- US-A- 4 802 371
- US-A- 5 329 823
- BARZ D ET AL: "EINSATZ PIEZOELEKTRISCHER MEHRKOMPONENTEN-KRAFTAUFNEHMER. ZUR ERFASSUNG VON RADKRAFTEN UND -MOMENTEN" ATZ AUTOMOBILTECHNISCHE ZEITSCHRIFT, VIEWEG PUBLISHING, WIESBADEN, DE, Bd. 92, Nr. 1, 1. Januar 1990 (1990-01-01), Seiten 30-36, XP000116501 ISSN: 0001-2785

## Beschreibung

### Technisches Gebiet

Die Erfindung betrifft einen Sensor zum Erfassen von Radkräften und/oder -Momenten an Reifenprüfständen im Labor und auf mobilen Versuchsfahrzeugen basierend auf dem piezoelektrischen Messprinzip.

### Stand der Technik

Radkräfte werden an Reifenprüfständen im Labor und auf mobilen Versuchsfahrzeugen gemessen, um Pneus und Felgen aber auch Radaufhängungen und Stossdämpfer zu testen und zu optimieren. Dazu dienen in der Regel zweierlei Versuchsanordnungen. In der ersten werden die Kraftsensoren im feststehenden Bereich, der Räder an Prüfständen oder Versuchsfahrzeugen, in sogenannten Messnaben, angebracht, in der zweiten in den beweglichen Bereichen der Räder, beispielsweise in den Felgen von Versuchsfahrzeugen. In beiden Anordnungen sind in den entsprechenden Applikationen mehrere Sensoren um die Radachse herum gleichmäßig in einem Kreis angeordnet. Beispiele bilden die Messnabe vom Typ 9295 oder das Messrad vom Typ 9296, beide von der Firma Kistler. Solche Anordnungen sind auch im Fachartikel "Einsatz piezoelektrischer Mehrkomponenten Kraftaufnehmer zur Erfassung von Radkräften und -Momenten" von D. Bartz et al in der ATZ Automobiltechnische Zeitschrift, Nr. 1 1990 S.30-36 beschrieben. Probleme ergeben sich bei Applikationen für LKW Räder, da in diesen Fällen viel höhere Kräfte übertragen werden. Herkömmliche Applikationen halten in Rad-Normalrichtung Gesamtkräfte von bis 30 kN, in den anderen Richtungen bis 20 kN aus. Da diese gesamten Kräfte über die Kraftmessdosen geführt werden, müssen diese entsprechend ausgelegt werden. Zu schwache Messdosen können bei einer Testfahrt zerbrechen und den Fahrer dadurch in Gefahr bringen.

Um solch hohe Kräfte messen zu können, müssen entweder grössere Quarzscheiben oder mehrere Messdosen herkömmlicher Grösse verwendet werden. Für grössere Quarzscheiben fehlt oft der Platz, da der frei zur Verfügung stehende Bereich durch den Felgenradius nach aussen und durch die grossen Wellen nach innen begrenzt ist. Bei der Verwindung einer grösseren Anzahl von Quarzscheiben wird die grosse Anzahl von Ladungskanälen, die von jeder Quarzscheibe her geführt werden muss, problematisch. Andererseits ist die Montage und Demontage der Räder dadurch komplizierter, weil jede Quarzscheibe separat vorgespannt werden muss.

In der CH 476990 ist ein Kraftaufnehmer angegeben, welcher zwischen zwei Platten mehrere, jeweils verschiedenartige Kraftsensoren sowie mindestens ein Blindelement aufweist. Ein solcher Kraftaufnehmer ist darauf ausgelegt, einzelne Komponenten separat messen zu können. Er eignet sich, um einzelne Komponenten in verschiedenen Kräfterichtungen zu messen, nämlich die Druckbelastung in Z-Richtung sowie die Schubbelastungen in X- und Y-Richtung. Beim Auftreten von Momenten hingegen, welche eine Kipplage der beiden Platten zueinander verursachen, ergibt dieser Kraftsensor keine zuverlässigen Messresultate mehr, weil die Kräfte, die an den verschiedenen Orten auf die verschiedenen Kraftaufnehmer wirken, unerschiedlich gross sind. Für Radkraftmessung oben beschriebener Art ist ein solcher Sensor daher nicht geeignet.

### Darstellung der Erfindung

Aufgabe der vorliegenden Erfindung ist es, einen Messaufbau oder einen Sensor zum Erfassen von Radkräften und/oder - Momenten an Reifenprüfständen im Labor und auf mobilen Versuchsfahrzeugen basierend auf dem piezoelektrischen Messprinzip zu beschreiben, der sich auch für hohe Lasten, bei heher Dynamik und hohen Eigenfrequenzen, insbesondere für LKW Räder eignet.

Die Aufgabe wird durch den unabhängigen Anspruch 1 gelöst. Die der Erfindung zugrunde liegende Idee besteht darin, dass als eingangs erwähnter Sensor eine Kraftmessdose verwendet wird, welche eine Grundplatte und eine der Grundplatte gegenüber liegende Deckplatte umfasst sowie zwei oder mehr zwischen diesen Platten flächig angeordnete, plattenförmige Quarzsensoren. Erfindungsgemäss sind die Grundplatte und die Deckplatte länglich ausgestaltet und die Quarzsensoren sind bezüglich der Längsausrichtung der Platten in einer Reihe angeordnet. Zudem sind die Quarzsensoren durch die Platten vorgespannt.

Durch die längliche Form lassen sich beispielsweise vier, fünf oder sechs solche Kraftmessdosen auf einer Kreislinie in dem zur Verfügung stehenden Bereich eines Rades anordnen. Andererseits ist der Ein- uns Ausbau sehr einfach, da die Kraftmessdosen bereits vorgespannt sind.

Weitere vorteilhafte Ausgestaltungen sind in den Unteransprüchen beschrieben.

### Kurze Beschreibung der Zeichnungen

Im Folgenden wird die Erfindung unter Beizug der Zeichnungen näher erklärt. Es zeigen
- Fig. 1: eine schematische perspektivische Darstellung einer erfindungsgemässen Kraftmessdose mit zwei Quarzsensoren;
- Fig. 2: eine schematische Darstellung eines Querschnitts der Kraftmessdose nach Fig. 1;
- Fig. 3: eine schematische Darstellung einer Aufsicht auf eine Einbausituation eines Messrades mit vier erfindungsgemässen Messdosen.

### Wege zur Ausführung der Erfindung

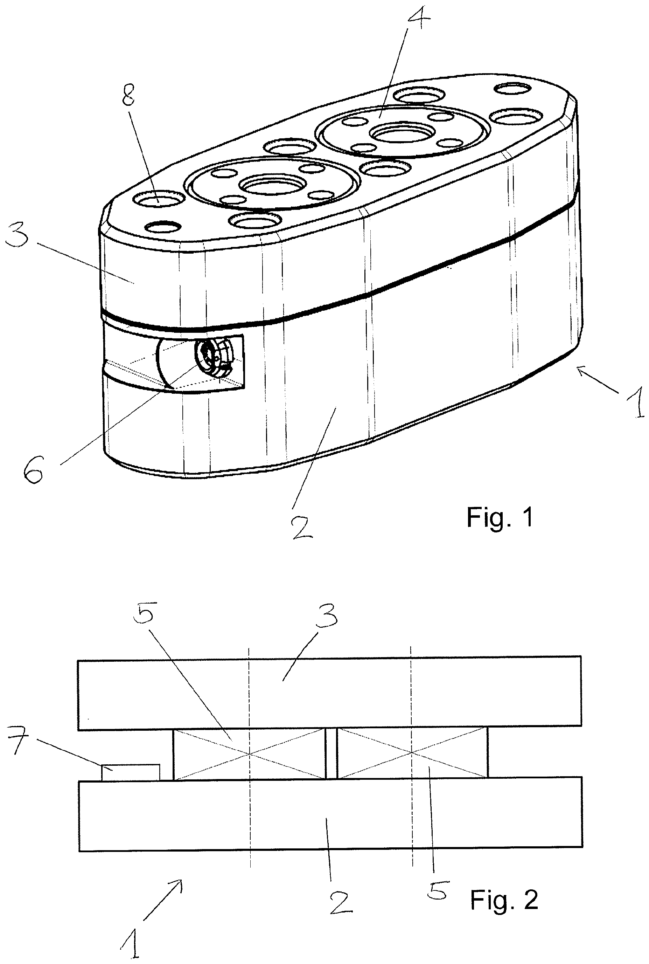

Fig. 1 zeigt eine erfindungsgemässe Kraftmessdose 1 zum Erfassen von Radkräften und/oder Momenten an Reifenprüfständen im Labor und auf mobilen Versuchsfahrzeugen. Sie umfasst eine Grundplatte 2 und eine der Grundplatte gegenüber liegende Deckplatte 3. Zwischen diesen Platten 2, 3 sind, wie in Fig. 2 ersichtlich, zwei plattenförmige Quarzsensoren 5 flächig angeordnet. In Fig. 1 sind zudem zwei Vorspannmuttern 4 ersichtlich, welche die dahinterliegenden, hier nicht sichtbaren Quarzsensoren 5 unter die gewünschte Vorspannung bringen können.

Umliegend um die Vorspannmuttern 4 sind Montagebohrungen 8 angebracht. Diese befinden sich in der Grundplatte 2, in Fig. 1 nicht ersichtlich, sowie in der Deckplatte 3. An diesen können radseitig sowie fahrzeugseitig resp. prüfstandseitig Befestigungsschrauben eingreifen und die Kraftmessdose 1 damit fixieren. Die Montage ist im Gegensatz zu herkömmlichen Messelementen für diese Zwecke daher einfacher, weil die Quarzsensoren 5 in dieser erfindungsgemässen Ausgestaltung bereits vorgespannt sind. Dadurch muss nur noch die Anbindung an die Radkomponenten vorgenommen werden. Ein Austauschen der Kraftmessdose 1 ist somit auch stark vereinfacht.

Erfindungsgemäss sind Grundplatte 2 und Deckplatte 3 länglich ausgestaltet. Insbesondere ist die Kraftmessdose 1 mindestens doppelt so lang wie breit. In dieser Anordnung sind zwei Quarzsensoren 5 in der Kraftmessdose 1 angeordnet, es können auch drei oder mehr sein. Diese Quarzsensoren 5 sollen jedenfalls bezüglich der Längsausrichtung der Platten in einer Reihe angeordnet sein, wobei die Reihe auch auf einem Kreissegment verlaufen kann, dessen Radius allerdings grösser sein muss als die Breite der Kraftmessdose 1.

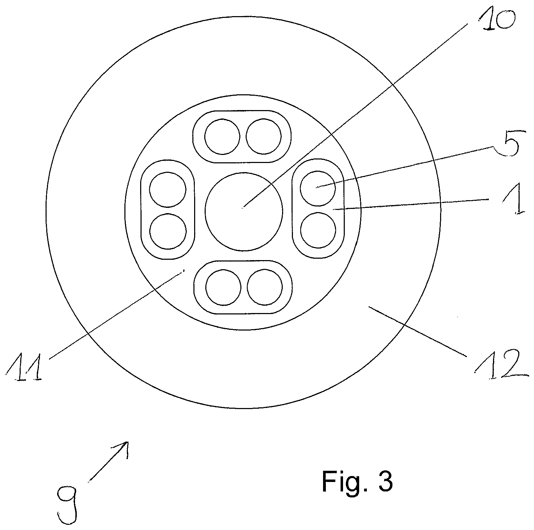

Wie in den Figuren 1 und 3 dargestellt kann die Kraftmessdose 1 mit abgeschrägten oder abgerundeten Ecken, insbesondere oval-ähnlich ausgestaltet sein. Durch diese Form lassen sich Kraftmessdosen 1 mit grossen Quarzsensoren 5 auf eine Felge 11 bringen, die insgesamt mehr Kraft aufnehmen können als die selbe Anzahl runder oder auch rechteckiger Kraftmessdosen 1.

Erfindungsgemäss sind keine Kraftnebenschlüsse zwischen der Grundplatte 2 und der Deckplatte 3 vorhanden, welche einen Kraftfluss zwischen diesen Platten 2, 3 zulassen, welche nicht über die Quarzsensoren 5 verlaufen. Der einzige mögliche Kraftnebenschluss verläuft über die die Vorspannmuttern 4.

Die Messleitungen und Nullleiter der Quarzsensoren 5 sind, alle in der Kraftmessdose 1 gebündelt zusammengerührt zu einem gemeinsamen Stecker 6. Dadurch muss bei der Montage und beim Austausch einer Kraftmessdose 1 nur ein Stecker 6 verbunden werden und nicht vier einzelne Leitungen, wie es der Fall wäre, wenn zwei einzelne Messelemente anstelle der Kraftmessdose 1 eingesetzt wären. Zudem kann ein Vorverstärker 7 in der Kraftmessdose 1 untergebracht sein, was die weitere Verarbeitung der Messsignale vereinfacht.

Solche erfindungsgemässe Kraftmessdosen 1 können im Bereich von LKW Rädern eingesetzt werden, wie in Fig. 3 dargestellt. Sie werden um eine Welle 10 herum gleichmässig verteilt im Bereich der Felge 11, an welcher schliesslich ein Reifen 12 angebracht ist.

Dadurch, dass mehrere Quarzsensoren 5 in der Kraftmessdose 1 untergebracht sind und mehrere Kraftmessdosen, in der Regel 3 bis 8, in einer Kreisform um die Radachse angeordnet werden, können diese so bemessen sein, dass die gesamte Anordnung der Kraftmessdosen in mindestens einer Richtung eine Last von mehr als 30 kN, insbesondere eine Last von mehr als 40 kN aufnehmen und messen kann, ohne dass dafür verwendeten Kraftmessdosen 1 dabei beschädigt werden.

Insbesondere können solche Kraftmessdosen 1 im feststehenden Bereich oder im rotierenden Bereich von Prüfständen oder von Versuchsfahrzeugen eingesetzt werden.

### Bezugszeichenliste

- 1: Kraftmessdose
- 2: Grundplatte
- 3: Deckplatte
- 4: Vorspannmutter vor einem Quarzsensor
- 5: Quarzsensor
- 6: Stecker
- 7: Vorverstärker
- 8: Montagevorrichtungen
- 9: Rad
- 10: Welle
- 11: Felge
- 12: Reifen

## Patentansprüche

1. Rad (9), Welle (10) und Felge (11) umfassend mehrere Kraftmessdosen (1) zum Erfassen von Radkräften und/oder -Momenten an Reifenprüfständen im Labor und auf mobilen Versuchsfahrzeugen basierend auf dem piezoelektrischen Messprinzip, wobei jede Kraftmessdose eine Grundplatte (2) und eine der Grundplatte gegenüber liegende Deckplatte (3) sowie zwei oder mehr zwischen diesen Platten (2), (3) flächig angeordnete, plattenförmige Quarzsensoren (5) umfasst; wobei die Grundplatte (2) und die Deckplatte (3) länglich ausgestaltet sind und die Quarzsensoren (5) dazwischen einschliessen, die bezüglich der Längsausrichtung der Platten (2), (3) in einer Reihe angeordnet und durch die Platten (2), (3) vorgespannt sind; **dadurch gekennzeichnet, dass** alle Messleitungen und Nullleiter der Quarzsensoren (5) jeder Kraftmessdose (1) zu einem gemeinsamen Stecker (6) der Kraftmessdose (1) geführt sind; dass die Kraftmessdosen (1) um eine Welle (10) herum gleichmässig verteilt sind, im Bereich einer Felge (11), an welcher anschliessend ein Reifen (12) angebracht ist; dass die Grundplatte (2) und die Deckplatte (3) mit abgeschrägten oder abgerundeten Ecken, insbesondere oval-ähnlich ausgestaltet sind; und dass die Kraftmessdosen (1) in einer Kreisform um die Welle (10) angeordnet sind.

2. Rad nach Anspruch 1, **dadurch gekennzeichnet, dass** die Vorspannung in jeder Kraftmessdose mittels Vorspannbolzen (4) erreicht wird.

3. Rad nach einem der vorhergehenden Ansprüche, **dadurch gekennzeichnet, dass** Quarzsensoren (5) umgehende Kraftnebenschlüsse zwischen der Grundplatte (2) und der Deckplatte (3) höchstens durch Vorspannbolzen (4) verlaufen.

4. Rad nach einem der vorhergehenden Ansprüche, **dadurch gekennzeichnet, dass** ein Vorverstärker (7) in der Kraftmessdose integriert ist.

5. Rad nach einem der vorhergehenden Ansprüche, **dadurch gekennzeichnet, dass** die Kraftmessdose an der Grundplatte (2) und an der Deckplatte (3) Montagevorrichtungen (8), insbesondere Montagebohrungen aufweist.

6. Rad nach einem der vorhergehenden Ansprüche, eingesetzt im Bereich von LKW Rädern.

7. Rad nach einem der vorhergehenden Ansprüche, einsetzbar im feststehenden Bereich von Prüfständen oder Versuchsfahrzeugen.

8. Rad nach einem der vorhergehenden Ansprüche, einsetzbar im rotierenden Bereich von Prüfständen oder Versuchsfahrzeugen.

## Claims

1. A wheel (9), shaft (10), and rim (11) comprising a plurality of load cells (1) for detecting wheel forces and/or moments on tire test stands in the laboratory and on mobile test vehicles based on the piezoelectric measuring principle wherein each load cell comprises a base plate (2) and a cover plate (3) disposed opposite of the base plate as well as two or more plate-shaped quartz sensors (5) two-dimensionally arranged between said plates; wherein said base plate (2) and said cover plate (3) are designed with an elongated shape and encase the quartz sensors (5) there between which are disposed in a row with respect to the longitudinal direction of plates (2), (3) and are pretensioned by the plates (2), (3); **characterized in that** all measuring lines and neutral conductors of said quartz sensors (5) of each of said load cells (1) are led to a common plug (6) of the load cell (1); that said load cells (1) are evenly distributed around a shaft (10) in the region of a rim to which a tire (12) will be mounted afterwards; that the base plate (2) and the cover plate (3) are configured with bevelled or rounded corners, in particular oval-like in shape; and that the load cells (1) are arranged around said shaft in the form of a circle.

2. The wheel according to claim 1 **characterized in that** said pretensioning in each load cell is achieved by means of tensioning screw (4).

3. The wheel according to any of the preceding claims **characterized in that** force shunts bypassing quartz sensors (5) pass between base plate (2) and cover plate (3), at most through tensioning screw (4).

4. The wheel according to any of the preceding claims **characterized in that** a preamplifier (7) is incorporated into the load cell.

5. The wheel according to any of the preceding claims **characterized in that** on the base plate (2) and on the cover plate (3) said load cell comprises mounting devices (8), in particular mounting holes.

6. The wheel according to any of the preceding claims used in the field of truck wheels.

7. The wheel according to any of the preceding claims useful in the stationary portion of test stands or test vehicles.

8. The wheel according to any of the preceding claims useful in the rotating portion of test stands or test vehicles.

## Revendications

1. Roue (9), arbre (10) et jante (11) comprenant une pluralité de cellules de charge (1) pour détecter des forces et des couples exercés par les roues sur les bancs d'essai en laboratoire et sur les véhicules d'essai mobiles basés sur le principe de mesure piézoélectrique, chaque cellule de charge comprenant une plaque de base (2) et une plaque de recouvrement (3) disposée en vis-à-vis de la plaque de base, ainsi que deux ou plusieurs capteurs à quartz (5) en forme de plaques et agencés de manière bidimensionnelle entre lesdites plaques; ladite plaque de base (2) et ladite plaque de recouvrement (3) étant conçues de forme oblongue et incluant entre elles lesdits capteurs à quartz (5) qui sont agencés en une rangée par rapport à la direction longitudinale des plaques (2), (3) et sont précontraints par les plaques (2), (3); **caractérisée en ce que** toutes les lignes de mesure et tous les conducteurs neutres desdits capteurs à quartz (5) de chacune desdites cellules de charge (1) sont amenés à un connecteur commun (6) de la cellule de charge (1); **en ce que** lesdites cellules de charge (1) sont réparties uniformément autour d'un arbre (10) dans la zone de la jante à laquelle un pneu (12) sera monté ultérieurement; **en ce que** la plaque de base (2) et la plaque de recouvrement (3) sont conçues avec des angles biseautés ou arrondis, en particulier en forme ovale; et **en ce que** lesdites cellules de charge (1) sont placées autour dudit arbre en forme d'un cercle.

2. Roue selon la revendication 1 **caractérisée en ce que** la précontrainte sur chacune des cellules de charge s'exerce à l'aide de la vis de tension (4).

3. Roue selon l'une quelconque des revendications précédentes **caractérisée en ce que** des dérivations de force contournant les capteurs à quartz (5) passent entre la plaque de base (2) et la plaque de recouvrement (3) au plus à travers la vis de tension (4).

4. Roue selon l'une quelconque des revendications précédentes **caractérisée en ce qu'**un préamplificateur (7) est intégré dans la cellule de charge.

5. Roue selon l'une quelconque des revendications précédentes **caractérisée en ce que** sur la plaque de base (2) et sur la plaque de recouvrement (3) ladite cellule de charge comprend des dispositifs de montage (8), en particulier des trous de fixation.

6. Roue selon l'une quelconque des revendications précédentes utilisée dans le domaine de roues de camions.

7. Roue selon l'une quelconque des revendications précédentes utilisée dans la zone stationnaire des bancs d'essai ou des véhicules d'essai.

8. Roue selon l'une quelconque des revendications précédentes utilisée dans la zone rotative des bancs d'essai ou des véhicules d'essai.
